(19)

Europäisches
Patentamt
European
Patent Office
Office européen
des brevets

(11) **EP 3 942 142 B1**

(12) **EUROPEAN PATENT SPECIFICATION**

(45) Date of publication and mention
of the grant of the patent:
**05.03.2025 Bulletin 2025/10**

(21) Application number: **20709188.5**

(22) Date of filing: **05.03.2020**

(51) International Patent Classification (IPC):
**E06B 3/66** (2006.01)

(52) Cooperative Patent Classification (CPC):
**E06B 3/6612; Y02A 30/249; Y02B 80/22**

(86) International application number:
**PCT/EP2020/055882**

(87) International publication number:
**WO 2020/187588 (24.09.2020 Gazette 2020/39)**

(54) **ASYMMETRICAL VACUUM-INSULATED GLAZING UNIT**

ASYMMETRISCHE VAKUUMISOLIERTE VERGLASUNGSEINHEIT

UNITÉ DE VITRAGE À ISOLATION PAR LE VIDE ASYMÉTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2019 EP 19163704**

(43) Date of publication of application:
**26.01.2022 Bulletin 2022/04**

(73) Proprietors:
• **AGC Glass Europe
1348 Louvain-La-Neuve (BE)**
• **AGC Inc.
Tokyo 100-8405 (JP)**
• **AGC Flat Glass North America, Inc.
Alpharetta, 30022-1167 (US)**
• **AGC Vidros do Brasil Ltda
CEP 12523-671 Guaratinguetá São Paulo (BR)**

(72) Inventors:
• **BEN TRAD, Abderrazek
6041 Gosselies (BE)**

• **WANG, Minwei
3000 LEUVEN (BE)**

(74) Representative: **AGC Glass Europe
Technovation Centre
Intellectual Property Department
Rue Louis Blériot 12
6041 Gosselies (BE)**

(56) References cited:
**EP-A1- 1 033 352      EP-A1- 1 630 344
WO-A1-2019/145332     JP-A- 2001 316 138**

• **AGC GLASS UK LTD.: "Performance Summary
Tables", 30 December 2008 (2008-12-30), http://
www.euglass.com/products/index.php?
dir=agc_glaverbel%2F, pages 380 - 407,
XP055373270, Retrieved from the Internet
<URL:http://www.euglass.com/products/
agc_glaverbel/Summary-tables.pdf> [retrieved
on 20170516]**

## Description

### Technical Field

The invention relates to a vacuum-insulated glazing unit provided with a low emissivity coating and having low stress levels induced by negative and positive temperature differences.

### Background Art

Vacuum-insulated glazing (VIG) units are recommended because of their high performance thermal insulation. A vacuum-insulated glazing unit is typically composed of at least two glass panes separated by an internal space in which a vacuum has been generated. In general, in order to achieve a high-performance thermal insulation, the Thermal transmittance, U, being U<1.2 W/m$^2$K. The absolute pressure inside the glazing unit is typically 0.1mbar or less and generally at least one of the two glass pane may be covered with a low emissivity coating. To obtain such a pressure inside the glazing unit, a hermetically bonding seal is placed on the periphery of the two glass panes and the vacuum is generated inside the glazing unit by virtue of a pump. To prevent the glazing unit from caving in under atmospheric pressure, due to the pressure difference between the interior and exterior of the glazing unit, discrete spacers are placed between the two glass panes.

Typical VIG units are symmetric VIG units made of two glass panes having the same glass thickness. The highly insulating properties of vacuum-insulated glazing together with the non-flexible hermetical bonding seals lead to higher thermal strain when there are large differences in temperature between the exterior ant the interior of a building. JP 2001316137 A therefore teaches to configure an asymmetric vacuum-insulated glazing unit wherein the inner glass pane disposed on the indoor side is thicker than the outer glass pane, to achieve thermal strain levels under strong sunlight that are lower than in a comparable symmetric VIG unit. While these asymmetric glazings reduce deformation in summer situations, they risk being submitted to higher stress than comparable symmetric VIG units in winter situations.

JP 2001316138 A teaches the opposite asymmetric VIG construction wherein the outer glass pane disposed on the outdoor side is thicker than the inner glass pane, for improved shock resistance and acoustic performances.

US 2015/0354264 A1 teaches a reduced pressure double glazed glass panel with a low-E film with an emissivity of 0.067 or less on the second glass surface of the outside glass, i.e. the glass surface of the outside glass that is oriented to face the gap portion, to provide sufficient heat insulating and heat shielding properties. The Low-E film is a stack of lower dielectric layer, metal layer, sacrificial layer and upper dielectric layer, preferably formed by magnetron sputtering.

WO 2016/063007 A1 discloses a vacuum-insulated glazing unit with a low emissivity coating on the exterior facing surface for anti-condensation properties.

EP 1630344 A1 teaches to provide a low emissivity coating of less than 0.2 emissivity on the interior surfaces of the glass panes of vacuum-insulated glazing unit. Examples of convenient low emissivity coating are sputtered coating stacks of the type dielectric/silver/sacrificial/dielectric or are chemical vapour deposition coatings based on doped tin oxide layers. While the addition of coatings is also interesting for the optimization of insulating or solar control properties of a VIG, these coatings however also modify the thermal stress imposed on the VIG.

EP 1 033 352 A1 discloses a vacuum-insulated glazing unit with an infrared-reflective coating, wherein the panes can have a different thickness.

However, none of the art addresses the technical problem of reducing the thermally induced stress in asymmetric VIG units wherein one or more glass panes are bearing low emissivity solar control or insulating coatings and are subjected to temperature difference between exterior and interior environments. Furthermore, none of the art addresses the technical problem of atmospheric pressure induced stress at the pillar locations of such VIG units and even less how to design such a vacuum-insulated glazing unit demonstrating improved combined, thermal and pressure induced stress levels while maintaining high performance thermal insulation.

Indeed none of the art addresses the technical problem of reducing the combined induced stress, and the resulting breakage risk, of VIG units bearing infrared reflecting coatings, both in summer situations, where the interior is colder than the exterior and also in winter situations where the exterior is colder than the interior, in particular in situations where the winter conditions are more severe than the summer conditions.

### Summary of invention

The aim of the present invention is to provide a vacuum-insulated glazing, bearing on the second glass pane's inner face an **infrared reflecting coating** that faces the interior volume and having a low overall stress-related risk of breakage in summer situations, where the interior is colder than the exterior, as well as in winter situations where the exterior is colder than the interior, in particular in situations where the winter conditions are more severe than the summer conditions. The infrared reflecting coating in the present invention may be an insulating coating or a solar control coating.

The inventors have surprisingly found that the combination of certain dimensions and thicknesses for the inner and outer glass panes, together with a certain pitch of the spacers as well as particular positioning of coatings and energetical properties of the glass panes led to a significantly reduced overall risk of stress-related breakage in vacuum-insulated glazings that are exposed to both mild summer situations, where the interior is colder than the exterior, as well as to severe winter situations where the exterior is colder than the interior. With the present invention asymmetric VIGs have their overall induced stress lowered, in particular embodiments stress is lowered in winter conditions to a level lower than that of their equivalent symmetric VIGs. Their equivalent symmetric VIG are identical in all regards, in particular regarding external dimensions of length, width and overall thickness, with the exception that the first and second glass sheets' thicknesses are the same. Symmetric VIGs are well established on the market and naturally form a reference for new developments in the field. They are known to generally reach their highest combined induced stress levels in winter conditions. An equivalent symmetric VIG's maximum combined induced stress level, whether reached in winter or summer conditions, thus forms a useful reference value for comparison to an asymmetric VIG. In certain particular embodiments of the present invention, asymmetric VIGs' overall induced stress values in both winter and summer conditions are lower than the maximum induced stress levels, tolerated in summer or winter conditions, by their equivalent symmetric VIGs.

The present invention relates to a vacuum insulating glazing unit extending along a plane, P, defined by a longitudinal axis, X, and a vertical axis, Z and having a width, W, measured along the longitudinal axis, X, and a length, L, measured along the vertical axis, Z. The length of the vacuum insulating glazing unit, L, is comprised between 300 and 4000 mm, (300 mm $\leq$ L $\leq$ 4000 mm) and the width of the vacuum insulating glazing unit, W, is equal comprised between 300 and 1500 mm, (300 mm $\leq$ W $\leq$ 1500 mm). In certain preferred embodiments of the present invention, L is comprised between 300 and 3000 mm to further reduce stress. The vacuum insulating glazing unit comprises:

> a. a first glass pane having a thickness $Z_1$ and an energetic absorptance $EA_1$ , and
> b. a second glass pane having a thickness $Z_2$ and an energetic absorptance $EA_2$,
> c. wherein $Z_1$ is equal to or greater than 5 mm, and
> d. wherein a thickness difference $\Delta Z$, of the thickness of the first glass pane, $Z_1$, and the thickness of the second glass pane, $Z_2$, is equal to or greater than 1 mm ($\Delta Z = Z_1 - Z_2 \geq 1$ mm).
> e. a set of discrete spacers positioned between the first and second glass panes, maintaining a distance between the first and the second glass panes and forming an array having a pitch, $\lambda$. The pitch, $\lambda$, is comprised between 10 mm and 35 mm (10 mm $\leq \lambda \leq$ 35 mm).
> f. a hermetically bonding seal (4) sealing the distance between the first and second glass panes over a perimeter thereof;
> g. an internal volume, V, defined by the first and second glass panes and the set of discrete spacers and closed by the hermetically bonding seal and wherein there is a vacuum of absolute pressure of less than 0.1 mbar
> h. an infrared reflecting coating having an emissivity of at most 0.4 on the face facing the inner volume of the second glass pane.

By convention, to describe the position of a pane surface in an insulating glazing unit, the surfaces of the two or more glass panes are numbered starting from the pane surface that faces the exterior (Position 1) towards the pane surface that faces the interior (Position 4 in a double glazing). For the purpose of the vacuum insulated glazings of the present invention, the pane surface numbering of the VIG is maintained even in embodiments where this VIG is combined with additional glass panes. Furthermore, the thicknesses are measured in the direction normal to the plane, P. For the purpose of the present invention the glass thicknesses are rounded to the nearest millimetre.

The vacuum-insulated glazing unit of the present invention, bears an infrared reflecting coating in position 3, that is on the face of the second, inner glass pane that is oriented towards the inner volume. Low overall induced stress is obtained when the weighted difference of energetic absorptance between the outer glass pane and the inner glass pane $\Delta EA$ is at most $0.0033 \Delta Z_2 /mm^2 - 0.0468 \Delta Z /mm + 0.7702$ ($\Delta EA \leq 0.0033 \Delta Z^2 /mm^2 - 0.0468 \Delta Z /mm + 0.7702$; $\Delta EA = EA_1 - 2*EA_2$).

Other aspects and advantages of the embodiments will become apparent from the following detailed description taken in conjunction with the accompanying drawing which illustrates, by way of example, the principles of the described embodiments.

## Brief description of drawings

This and other aspects of the present invention will now be described in more detail, with reference to the appended drawing showing an exemplifying embodiment of the invention.

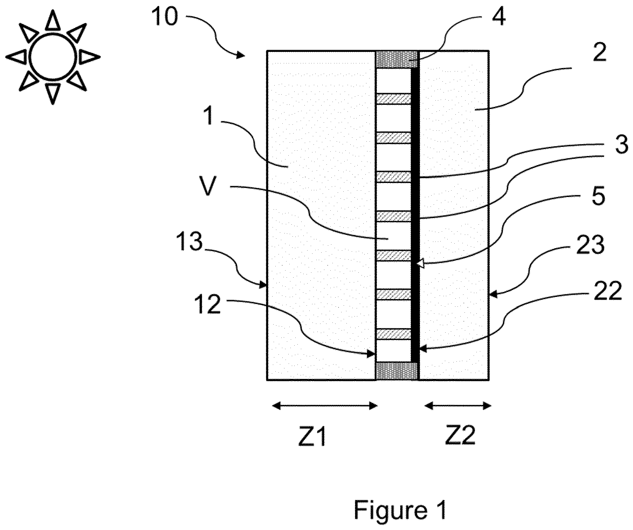

Figure 1 shows a cross sectional view of an asymmetric vacuum-insulated glazing unit according to one embodiment of the present invention.

## Description of embodiments

It is an object of the present invention to provide a vacuum-insulated glazing unit (hereinafter referred as VIG) which demonstrates low stress thermally induced when exposed to high positive and negative temperature differences between the exterior and interior environment, provides thermal insulating properties, is highly sustainable over its life time and can be produced in an efficient and cost effective manner.

It is in particular an object of the present invention to provide a vacuum-insulated glazing unit (hereinafter referred to as VIG) which demonstrates high performance thermal insulation or solar control and improved resistance to the stress induced by the combination of a temperature difference between interior and exterior environments and of atmospheric pressure.

These objectives are realized by a vacuum-insulated glazing unit of the present invention which is asymmetric, i.e. wherein the first glass pane is thicker than a second glass pane (Z1>Z2), and carefully dimensioned by a specific size including length (L) range and a width (W) range, a specific interval between the spacers (A), and a specific thickness of the second glass pane (Z2) and where the second glass pane carries an infrared reflecting coating on its inner face, facing the inner volume, when the following condition on the weighted difference of energetic absorption of the first and the second glass pane is met:

$$\Delta EA \leq 0.0033\ \Delta Z^2/mm^2 - 0.0468\ \Delta Z/mm + 0.7702;\ \Delta EA = EA_1 - 2*EA_1,$$

wherein $300\ mm \leq L \leq 4000\ mm$,
$300\ mm \leq W \leq 1500\ mm$,
$Z_1 \geq 5\ mm$, $Z_2 \geq 3\ mm$,
$\Delta Z = Z_1 - Z_2 \geq 1\ mm$, and
$10\ mm \leq \lambda \leq 35\ mm$.

The thicker, first glass pane is destined to face the outside of the building, the thinner, second glass pane is destined to face the inside of the building. Such a combination of different thicknesses improves the stress related to winter conditions, also with an infrared reflecting coating in position 3. Surprisingly, also in summer situations, low stress can be obtained on an such an asymmetric VIG, bearing an infrared reflecting coating in position 3. To achieve this, it was in fact found to be critical to adapt the first and second glass panes' energetic absorptance levels in view of the VIG's critical dimensions.

The invention relates to a vacuum-insulated glazing unit typically comprising a first glass pane and a second glass pane that are associated together by way of set of discrete spacers that holds said panes a certain distance apart, typically in the range of between 50 μm and 1000 μm, preferably between 50 μm and 500 μm and more preferably between 50 μm and 150 μm, and between said glass panes, an internal space comprising at least one first cavity, in which cavity there is an absolute vacuum less than 0.1 mbar, said space being closed with a peripheral hermetically bonding seal placed on the periphery of the glass panes around said internal space. For the present invention the pitch of the spacers it is understood to mean the shortest distance separating any given spacer from its nearest neighbouring spacer. Preferably the spacers are spaced apart in a regular pattern, for example a square, hexagonal, or triangular pattern.

As illustrated in Figure 1, the vacuum insulating glazing unit (10) extending along a plane, P, defined by a longitudinal axis, X, and a vertical axis, Y. The VIG of the present invention comprises:

a. a first glass pane (1) having an inner pane face (12) and an outer pane face (13) and having a thickness $Z_1$, and a second glass pane (2) having an inner pane face (22) and an outer pane face (23) and having a thickness, $Z_2$. The thicknesses are measured, to the nearest mm, in the direction normal to the plane, P.
b. a set of discrete spacers (3) positioned between the first and second glass panes and maintaining a distance between the first and the second glass panes;
c. a hermetically bonding seal (4) sealing the distance between the first and second glass panes over a perimeter thereof;
d. an internal volume, V, defined by the first and second glass panes and the set of discrete spacers and closed by the hermetically bonding seal and wherein there is a vacuum of absolute pressure of less than 0.1 mbar.

The vacuum-insulated glazing unit of the present invention will be hereinafter referred to as the "asymmetric VIG".

Within the VIG, the first glass pane has an inner pane face (12) and an outer pane face (13). The second glass pane has an inner pane face (22) and an outer pane face (23). The inner pane faces are facing the internal volume, V, of the asymmetric VIG. The outer pane faces are facing the exterior and interior of a building for example.

As illustrated in Figure 1, the inner pane face (12) of the first glass pane (1) of the asymmetric VIG of the present invention is provided with an infrared reflecting coating (hereinafter referred to as IR-coating).

The IR-coating (5) of the present invention has an emissivity of not more than 0.4, preferably less than 0.2, in particular less than 0.1, less than 0.05 or even less than 0.04. The IR-coating of the present invention may comprise a metal based low emissive IR-coating; these coatings typically are a system of thin layers comprising one or more, for example two, three or four, functional layers based on an infrared radiation reflecting material and at least two dielectric coatings, wherein each functional layer is surrounded by dielectric coatings. The IR-coating of the present invention may in particular have an emissivity of at least 0.010. The functional layers are generally layers of silver with a thickness of some nanometres, mostly about 5 to 20nm. Concerning the dielectric layers, they are transparent and traditionally each dielectric layer is made from one or more layers of metal oxides and/or nitrides. These different layers are deposited, for example, by means of vacuum deposition techniques such as magnetic field-assisted cathodic sputtering, more commonly referred to as "magnetron sputtering". In addition to the dielectric layers, each functional layer may be protected by barrier layers or improved by deposition on a wetting layer.

The IR-coatings in the present invention may have anti-solar or solar control properties that may reduce the risk of overheating, for example, in an enclosed space with large glazed surfaces and thus reduce the power load to be taken into account for air-conditioning in summer. In this case the glazing must allow the least possible amount of total solar energy radiation to pass through, i.e. it must have the lowest possible solar factor (SF or g). Often, it is highly desirable that the glazing guarantees a certain level of light transmission (LT) in order to provide a sufficient level of illumination inside the building. These somewhat conflicting requirements express the wish to obtain a glazing unit with a high selectivity (S) defined by the ratio of light transmission to solar factor. The IR-coatings in the present invention may also be insulating coatings with a low emissivity tuned to reduce a building's heat loss through longer wavelength infrared radiation. Thus, they improve the thermal insulation of glazed surfaces and reduce energy losses and heating costs in cold periods.

**Particular embodiments**

The following particular embodiments of combinations of glass pane thicknesses, pitch ranges and dimensions were found to provide combined induced stress levels in both winter and summer conditions , lower than the equivalent symmetric vacuum-insulated glazing, of the same overall thickness. $EA_1$ and $EA_2$ designate the first and second glass panes' energetic absorptances respectively.

In particular the present invention's stress resistance in summer conditions is evaluated in comparison to its equivalent symmetric VIG. For the purpose of the present invention, the equivalent symmetric VIG of an asymmetric VIG is a VIG having all the values of W, L, $\lambda$, having the same overall thickness $Z_1+Z_2$, but wherein the thickness of the first pane is the same as the thickness of the second pane $Z_1=Z_2$.

In particular, in both winter and summer conditions, combined induced stress levels lower than the maximum combined stress level induced in an equivalent symmetric vacuum-insulated glazing, of the same overall thickness, are reached for a vacuum-insulated glazing wherein $Z_2$ = 3mm and 10 mm $\leq \lambda \leq$ 25 mm when the following condition on the weighted difference of energetic absorption of the first and the second glass pane is met: $\Delta EA \leq 0.0084\, \Delta Z_2/mm^2 - 0.1545\, \Delta Z/mm + 0.6966$; $\Delta EA = EA_1 - 2{*}EA_2$, wherein 300 mm $\leq$ L $\leq$ 3000 mm, 300 mm $\leq$ W $\leq$ 1500 mm, $Z_1 \geq$ 5 mm, $\Delta Z = Z_1 - Z_2 \geq$ 1 mm.

In particular, in both winter and summer conditions, combined induced stress levels lower than the maximum combined stress level induced in an equivalent symmetric vacuum-insulated glazing, of the same overall thickness are reached for a vacuum-insulated glazing wherein $Z_2$ = 4mm and 10 mm $\leq \lambda \leq$ 25 mm when the following condition on the weighted difference of energetic absorption of the first and the second glass pane is met: $\Delta EA \leq - 0.0214\, \Delta Z/mm + 0.5696$; $\Delta EA = EA_1 - 2{*}EA_2$, wherein 300 mm $\leq$ L $\leq$ 3000 mm, 300 mm $\leq$ W $\leq$ 1500 mm, $Z_1 \geq$ 5 mm, $\Delta Z = Z_1 - Z_2 \geq$ 1 mm.

In particular, in both winter and summer conditions, combined induced stress levels lower than the maximum combined stress level induced in an equivalent symmetric vacuum-insulated glazing, of the same overall thickness are reached for a vacuum-insulated glazing wherein $Z_2$ = 5mm and 10 mm $\leq \lambda \leq$ 35 mm when the following condition on the weighted difference of energetic absorption of the first and the second glass pane is met: $\Delta EA \leq 0.0033\, \Delta Z_2/mm^2 - 0.0468\, \Delta Z/mm + 0.7434$; $\Delta EA = EA_1 - 2{*}EA_2$, wherein 300 mm $\leq$ L $\leq$ 3000 mm, 300 mm $\leq$ W $\leq$ 1500 mm, $Z_1 \geq$ 5 mm, $\Delta Z = Z_1 - Z_2 \geq$ 1 mm.

In particular, in both winter and summer conditions, combined induced stress levels lower than the maximum combined stress level induced in an equivalent symmetric vacuum-insulated glazing, of the same overall thickness are reached for a vacuum-insulated glazing wherein $Z_2$ = 6mm and 10 mm $\leq \lambda \leq$ 35 mm when the following condition on the weighted difference of energetic absorption of the first and the second glass pane is met: $\Delta EA \leq 0.0033\, \Delta Z^2/mm^2 - 0.0468\, \Delta Z/mm + 0.7702$; $\Delta EA = EA_1 - 2{*}EA_2$, wherein 300 mm $\leq$ L $\leq$ 3000 mm, 300 mm $\leq$ W $\leq$ 1500 mm, $Z_1 \geq$ 5 mm, $\Delta Z = Z_1 - Z_2 \geq$ 1 mm.

In particular, in both winter and summer conditions, combined induced stress levels lower than the maximum combined stress level induced in an equivalent symmetric vacuum-insulated glazing, of the same overall thickness are reached for a vacuum-insulated glazing wherein $Z_2$ = 4mm and 25 mm < $\lambda \leq$ 30 mm when the following condition on the weighted difference of energetic absorption of the first and the second glass pane is met: $\Delta EA \leq$ - 0.0308 $\Delta Z$/mm + 0.5294; $\Delta EA = EA_1 - 2*EA_2$, wherein 300 mm $\leq L \leq$ 3000 mm, 300 mm $\leq W \leq$ 1500 mm, $Z_1 \geq$ 5 mm, $\Delta Z = Z_1 - Z_2 \geq$ 1 mm.

In one embodiment of the present invention, the thickness of the first glass pane, $Z_1$, of the asymmetric VIG, may be equal to or greater than 5 mm ($Z_1 \geq$ 5 mm), preferably may be equal to or greater to 6 mm, ($Z_1 \geq$ 6mm), preferably equal to or greater to 8 mm, ($Z_1 \geq$ 8 mm). Typically, the thickness of the first glass pane, $Z_1$, will be not more than 12 mm, preferably no more than 10 mm. In another embodiment, the thickness of the second glass pane, $Z_2$, of the asymmetric VIG, may typically be equal to or greater than 3 mm ($Z_2 \geq$ 3mm), preferably may be equal to or greater to 4 mm, ($Z_2 \geq$ 4 mm), preferably equal to or greater to 5 mm, ($Z_2 \geq$ 5 mm). Typically, the thickness of the second glass pane, $Z_2$, will be not more than 10 mm, preferably no more than 8 mm. However, in order to improve the mechanical resistance of the asymmetric VIG of the present invention, it is preferred to keep the thickness of the second pane, $Z_2$, to a minimum.

In another embodiment of the present invention, the present invention also applies to any type of glazing unit comprising glass panes (two, three or more) bounding insulating or non-insulating internal spaces (also called multiple glazing units) provided that a partial vacuum is generated in at least one of these internal spaces. Therefore, in one embodiment, to improve the mechanical performances of the asymmetric VIG of the present invention, a third additional glass pane can be coupled to at least one of the outer pane faces (13 and/or 23) of the first and second glass pane along the periphery of the VIG via a peripheral spacer bar creating in insulating cavity sealed by a peripheral edge seal. Said peripheral spacer bar maintained a certain distance between the third glass pane and the at least one of the outer pane face one of the first and second glass panes. Typically said spacer bar comprises a desiccant and has typically a thickness comprised between 6 mm to 20 mm, preferably 9 to 15mm. In general, said second internal volume is filled with a predetermined gas selected from the group consisting of air, dry air, argon (Ar), krypton (Kr), xenon (Xe), sulfur hexafluoride (SF6), carbon dioxide or a combination thereof. Said predetermined gas are effective for preventing heat transfer and/or may be used to reduce sound transmission.

When the asymmetric VIG is used to close an opening within a partition separating the interior and exterior spaces, it is preferred to the third glass pane faces the exterior space. It is further preferred that the third glass pane is provided with at least a pyrolytic TCO-based coating on at least one of its surfaces. Such specific glazing unit provides higher mechanical performance while improving the emissivity performances and/or reducing the formation of condensation. In particular and for safety reasons, the outer face of the second glass pane (23) facing the interior environment may be additionally laminated to at least one glass sheet by at least one polymer interlayer forming a laminated assembly.

In one embodiment of the present invention, at least one of the outer pane faces (13 and/or 23) of the first and the second glass pane may be further laminated to at least one additional glass sheet by at least one polymer interlayer forming a laminated assembly, for safety and security reasons.

Within the laminate assembly, the at least one additional glass sheet preferably has a thickness, $Z_s$, equal to or greater than 0.5 mm ($Z_s \geq$ 0.5 mm). The thickness is measured in the direction normal to the plane, P. The at least one polymer interlayer is a transparent or translucent polymer interlayer comprising a material selected from the group consisting ethylene vinyl acetate (EVA), polyisobutylene (PIB), polyvinyl butyral (PVB), polyurethane (PU), polyvinyl chlorides (PVC), polyesters, copolyesters, assembly polyacetals, cyclo olefin polymers (COP), ionomer and/or an ultraviolet activated adhesive and others known in the art of manufacturing glass laminates. Blended materials using any compatible combination of these materials can be suitable, as well.

Reinforced acoustic insulation with acoustic laminated glass are also compatible with the present concept to improve the performances of the window or door. In such case, the polymer interlayer comprises at least one additional acoustic material inserted between two polyvinyl butyral films. Glass panes with electrochromic, thermochromic, photochromic or photovoltaic elements are also compatible with the present invention.

The first and second glass panes of the asymmetric VG of the present invention can be chosen among float clear, extra-clear or colored glass technologies. The term "glass" is herein understood to mean any type of glass or equivalent transparent material, such as a mineral glass or an organic glass. The mineral glasses used may be irrespectively one or more known types of glass such as soda-lime-silica, aluminosilicate or borosilicate, crystalline and polycrystalline glasses. The glass pane can be obtained by a floating process, a drawing process, a rolling process or any other process known to manufacture a glass pane starting from a molten glass composition. The glass panes can optionally be edge-ground. Edge grinding renders sharp edges into smooth edges which are much safer for people who could come in contact with the vacuum-insulating glazing, in particular with the edge of the glazing. Preferably, the glass pane according to the invention is a pane of soda-lime-silica glass, aluminosilicate glass or borosilicate glass. More preferably and for reasons of lower production costs, the glass pane according to the invention is a pane of soda-lime-silica glass. Typically, the first and second glass panes of the present invention are annealed glass panes. Preferably, the composition for the first and second glass panes of the asymmetric VIG of the invention comprises the following components in weight percentage, expressed with respect to the total weight of glass (Table 1, Comp. A). More preferably, the glass composition (Table 1, Comp. B) is a soda-lime-silicate-type glass with a base glass matrix of the composition comprising the following components in weight percentage, expressed with respect to the total weight of glass.

Table 1

|  | Comp. A | Comp. B |
|---|---|---|
| $SiO_2$ | 40 to 78% | 60 to 78 % |
| $Al_2O_3$ | 0 to 18% | 0 to 8 %, preferably 0 to 6 % |
| $B_2O_3$ | 0 to 18% | 0 to 4 %, preferably 0 to 1% |
| $Na_2O$ | 0 to 20% | 5 to 20 %, preferably 10 to 20 % |
| CaO | 0 to 15% | 0 to 15 %, preferably 5 to 15 % |
| MgO | 0 to 10% | 0 to 10 %, preferably 0 to 8 % |
| $K_2O$ | 0 to 10% | 0 to 10% |
| BaO | 0 to 5% | 0 to 5 %, preferably 0 to 1 %. |

Other particular glass compositions for the first and second glass panes of the asymmetric VIG of the invention, comprises the following components of Table 2 in weight percentage, expressed with respect to the total weight of glass.

Table 2

| Comp. C | Comp. D | Comp. E |
|---|---|---|
| $65 \leq SiO_2 \leq 78$ wt% | $60 \leq SiO_2 \leq 78$ % | $65 \leq SiO_2 \leq 78$ wt% |
| $5 \leq Na_2O \leq 20$ wt% | $5 \leq Na_2O \leq 20$ % | $5 \leq Na_2O \leq 20$ wt% |
| $0 \leq K_2O < 5$ wt% | $0.9 < K_2O \leq 12$ % | $1 \leq K_2O < 8$ wt% |
| $1 \leq Al_2O_3 < 6$ wt%, pref $3 < Al_2O_3 \leq 5$ % | $4.9 \leq Al_2O_3 \leq 8$ % | $1 \leq Al_2O_3 < 6$ wt% |
| $0 \leq CaO < 4.5$ wt% | $0.4 < CaO < 2$ % | $2 \leq CaO < 10$ wt% |
| $4 \leq MgO \leq 12$ wt% | $4 < MgO \leq 12$ % | $0 \leq MgO \leq 8$ wt% |
| $(MgO/(MgO+CaO)) \geq 0.5$, preferably $0.88 \leq [MgO/(MgO+CaO)] < 1$ |  | $0.1 \leq K_2O/(K_2O+Na_2O) \leq 0.7$ |

In particular, examples of base glass matrixes for the composition according to the invention are described in published in PCT patent applications WO 2015/150207 A1, WO 2015/150403 A1,

WO 2016/091672 A1, WO 2016/169823 A1 and WO 2018/001965 A1.

The second and first glass panes can be of the same dimensions or of different dimensions and form thereby a stepped VIG. In a preferred embodiment of the present invention, the first and the second glass panes comprise first and second peripheral edges, respectively and wherein the first peripheral edges are recessed from the second peripheral edges or wherein the second peripheral edges are recessed from the first peripheral edges. This configuration allows to reinforce the strength of the hermetically bonding seal.

In one embodiment, to provide a VIG with higher mechanical performances and/or to improve further the safety of the VIG, it can be contemplated to thermally or chemically pre-stress the first and/or second glass pane(s) of the present invention. In this instance, it is required that both the first and second glass panes are treated by the same pre-stress treatment to provide the same resistance to thermal induced load. Therefore, if pre-stress treatment occurs on the glass panes, then it requires that the first glass pane and the second glass pane are both heat strengthened glass panes, or that the first glass pane and the second glass pane are both thermally toughened glass panes or that the first glass pane and the second glass pane are both chemically strengthened glass panes.

Heat strengthened glass is heat treated using a method of controlled heating and cooling which places the glass surface under compression and the glass core under tension. This heat treatment method delivers a glass with a bending strength greater than annealed glass but less than thermally toughened safety glass.

Thermally toughened safety glass is heat treated using a method of controlled high temperature heating and rapid cooling which puts the glass surface under compression and the glass core under tension. Such stresses cause the glass, when impacted, to break into small granular particles instead of splintering into jagged shards. The granular particles are less likely to injure occupants or damage objects.

The chemical strengthening of a glass article is a heat induced ion-exchange, involving replacement of smaller alkali sodium ions in the surface layer of glass by larger ions, for example alkali potassium ions. Increased surface compression stress occurs in the glass as the larger ions "wedge" into the small sites formerly occupied by the sodium ions. Such a chemical treatment is generally carried out by immerging the glass in an ion-exchange molten bath containing one or more molten salt(s) of the larger ions, with a precise control of temperature and time. Aluminosilicate-type glass compositions, such as for example those from the products range DragonTrail® from Asahi Glass Co. or those from the products range Gorilla® from Corning Inc., are also known to be very efficient for chemical tempering.

As depicted in Figure 1, the vacuum-insulated glazing unit of the present invention comprises a plurality of discrete spacers (3), also referred to as pillars, sandwiched between the first and second glass panes (1, 2) so as to maintain the internal volume, V. As per invention, the discrete spacers are positioned between the first and second glass panes, maintaining a distance between the first and the second glass panes and forming an array having a pitch, $\lambda$, comprised between 10 mm and 35 mm ($10\,mm \leq \lambda \leq 35\,mm$). By pitch, it is meant the interval between the discrete spacers. In a preferred embodiment, the pitch is comprised between 20 mm and 35 mm ($20\,mm \leq \lambda \leq 35\,mm$). The array within the present invention is typically a regular array based on an equilateral triangular, square or hexagonal scheme, preferably a square scheme.

The discrete spacers can have different shapes, such as cylindrical, spherical, filiform, hour-glass shaped, C-shaped, cruciform, prismatic shape... It is preferred to use small pillars, i.e. pillars having in general a contact surface to the glass pane, defined by its external circumference, equal to or lower than 5 mm$^2$, preferably equal to or lower than 3 mm$^2$, more preferably equal to or lower than 1 mm$^2$. These values may offer a good mechanical resistance whilst being aesthetically discrete. The discrete spacers are typically made of a material having a strength endurable against pressure applied from the surfaces of the glass panes, capable of withstanding high-temperature process such as burning and baking, and hardly emitting gas after the glass panel is manufactured. Such a material is preferably a hard metal material, quartz glass or a ceramic material, in particular, a metal material such as iron, tungsten, nickel, chrome, titanium, molybdenum, carbon steel, chrome steel, nickel steel, stainless steel, nickel-chromium steel, manganese steel, chromium-manganese steel, chromium-molybdenum steel, silicon steel, nichrome, duralumin or the like, or a ceramic material such as corundum, alumina, mullite, magnesia, yttria, aluminum nitride, silicon nitride or the like.

As shown in Figure 1 , the internal volume, V, delimited between the glass panes (1, 2) of the vacuum-insulated glazing (10) of the present invention is closed with a hermetically bonding seal (4) placed on the periphery of the glass panes around said internal space. The said hermetically bonding seal is impermeable and hard. Such as used here and unless otherwise indicated, the term "impermeable" is understood to mean impermeable to air or any other gas present in the atmosphere.

Various hermetically bonding seal technologies exist. A first type of seal (the most widespread) is a seal based on a solder glass for which the melting point is lower than that of the glass of the glass panels of the glazing unit. The use of this type of seal limits the choice of low-E layers to those that are not degraded by the thermal cycle required to implement the solder glass, i.e. to those that are able to withstand a temperature possibly as high as 250° C. In addition, since this type of solder-glass-based seal is only very slightly deformable, it does not allow the effects of differential expansion between the interior-side glass panel of the glazing unit and the exterior-side glass panel of the glazing unit when said panels are subjected to large temperature differences to be absorbed. Quite substantial stresses are therefore generated at the periphery of the glazing unit and may lead to breakage of the glass panels of the glazing unit.

A second type of seal comprises a metal seal, for example a metal strip of a small thickness (<500 $\mu$m) soldered to the periphery of the glazing unit by way of a tie underlayer covered at least partially with a layer of a solderable material such as a soft tin-alloy solder. One substantial advantage of this second type of seal relative to the first type of seal is that it is able to partially deform in order to partially absorb the differential expansion created between the two glass panels. There are various types of tie underlayers on the glass panel.

Patent application WO 2011/061208 A1 describes one example embodiment of a peripheral impermeable seal of the second type for a vacuum-insulated glazing unit. In this embodiment, the seal is a metal strip, for example made of copper, that is soldered by means of a solderable material to an adhesion band provided on the periphery of the glass panes.

A vacuum of absolute pressure less than 0.1 mbar, preferably less than 0.01 mbar is created, within the internal volume, V, defined by the first and second glass panes and the set of discrete spacers and closed by the hermetically bonding seal within the asymmetric VIG of the present invention.

The internal volume of the asymmetric VIG of the present invention, can comprise a gas, for example, but not exclusively, air, dry air, argon (Ar), krypton (Kr), xenon (Xe), sulfur hexafluoride (SF 6), carbon dioxide or a combination thereof. The transfer of energy through an insulating panel having this conventional structure is decreased, because of the presence of the gas in the internal volume, relative to a single glass pane.

The internal volume may also be pumped of any gas, creating therefore a vacuum glazing unit. Energy transfer through a vacuum-insulated insulating glazing unit is greatly decreased by the vacuum. To generate the vacuum in the internal space of the glazing unit, a hollow glass tube bringing the internal space into communication with the exterior is generally provided on the main face of one of the glass panes. Thus, the partial vacuum is generated in the internal space by pumping out gases present in the internal space by virtue of a pump connected to the exterior end of the glass tube.

To maintain for the duration a given vacuum level in a vacuum-insulated glazing unit, a getter may be used in the glazing panel. Specifically, the internal surfaces of the glass panes making up the glazing panel may release over time gases absorbed beforehand in the glass, thereby increasing the internal pressure in the vacuum-insulated glazing panel and thus decreasing the vacuum performance. Generally, such a getter consists of alloys of zirconium, vanadium, iron, cobalt, aluminium, etc., and is deposited in the form of a thin layer (a few microns in thickness) or in the form of a block placed between the glass panes of the glazing panel so as not to be seen (for example hidden by an exterior enamel or by a portion of the peripheral impermeable seal). The getter forms, on its surface, a passivation layer at room temperature, and must therefore be heated in order to make the passivation layer disappear and thus activate its alloy gettering properties. The getter is said to be "heat activated".

Table 3

| Ref.# | Feature |
|---|---|
| 10 | Vacuum-insulated glazing unit |
| 1 | First glass pane |
| 12 | Inner pane face of the first glass pane |
| 13 | Outer pane face of the first glass pane |
| 2 | Second glass pane |
| 22 | Inner pane face of the second glass pane |
| 23 | Outer pane face of the second glass pane |
| 3 | Discrete spacers |
| 4 | Hermetically bonding seal |
| 5 | lowE coating |
| V | Internal volume |

**Examples**

In order to evaluate the breakage risk, the combined stress resulting from atmospheric pressure stress, due to the vacuum in the inner volume V, and of the thermal induced stress, due to the temperature difference on both sides of the glazing, was calculated.

Because of the vacuum maintained between the two panes of the VIG, the atmospheric pressure causes permanent tensile stresses at the external surfaces of the glass panes of the VIG at each pillar location. It is known by the skilled person that for small pillars, the tensile stress induced by the pillars at the external surfaces of the glass panes is independent of the size of its external circumference. By small pillars, it is generally meant pillars having a contact surface to the glass pane, defined by its external circumference, equal to or lower than 5 mm$^2$, preferably equal to or lower than 3 mm$^2$, more preferably equal to or lower than 1 mm$^2$.

In those instances and for regular arrays based on an equilateral triangular, square or hexagonal scheme, this atmospheric pressure induced stress also referred to as tensile stress, can be calculated for a glass pane by the following formula: $\sigma_p \leq 0.11 \times \lambda^2/Z^2$ [$MPa$], wherein $\lambda$ [m] and Z [m] are respectively, the pitch between the spacers and the glass pane's thickness. By "pitch", it is understood to mean the shortest distance separating any spacer from its neighbours. In particular, for square based regular arrays, the tensile stress is maximum and therefore follows the following formula : $\sigma_p = 0.11 \times \lambda^2/Z^2$ [$MPa$].

The maximum atmospheric pressure stress is calculated for each of the VIG's first and second glass sheets, $\sigma_{p1}$ and $\sigma_{p2}$.

Thermal induced tensile stress on the external surface of a glass pane of a VIG occurs as soon as there is a temperature difference between the first glass pane $(1, T_1)$ and the second glass panes $(2, T_2)$ and increases with increasing differences between $T_1$ and $T_2$. The temperature difference ($\Delta T$) is the absolute difference between the mean temperature, $T_1$, calculated for the first glass pane (1) and the mean temperature, $T_2$, calculated for the second glass pane (2) The mean temperature of a glass pane may for example be calculated from numerical simulations known by the skilled person in the art. For the present invention the temperature difference between the two glass panes was calculated using the calculation software "Window 7.4" which is based on the method proposed by the American National Fenestration Rating Council NFRC that is consistent with the ISO 15099. Thermal induced stress may lead to breaking the VIG, when such absolute temperature difference between the glass panes reaches 30° C and even more when the absolute temperature difference is higher than 40° C in severe conditions. The temperature of the interior environment is typically from 20° C to 25° C whereas the temperature of the exterior environment can extend from -20° C in the winter to +35° C in the summer. Therefore, the temperature difference between the interior environment and the exterior environment can reach more than 40° C in severe conditions. Therefore, the temperature difference ($\Delta T$) between the mean temperature, T=, calculated for the first glass pane (1) and the mean temperature, $T_2$, calculated for the second glass pane (2) can reach more than 40° C as well. Numerical simulation is used to calculate the maximum thermal stress $\sigma_T$ induced on the external surface of each glass pane of the VIG. A finite element analysis (FEA) model by commercial software Abaqus2017 (formerly referred to by ABAQUS) has been built to stimulate the behaviour of a VIG when exposed to different temperature conditions. The calculations were achieved with glass panes being meshed using C3D8R elements with 5 integrations points on glass thickness. The global mesh size used was 1cm. In order to achieve the $\Delta T$ of the present invention, initial and uniform temperature was imposed on both glass panes then uniform temperature variation has been imposed on one of the glass pane, while maintaining the other glass pane at the initial temperature. Mechanical coupling was imposed between the two glass panes to force equal displacement of the two touching glass surfaces. Other boundary conditions have been set to prevent rigid body motion of the assembly. Calculations were performed for all glazings having free, unconstrained edges.

The hard winter temperature conditions used for the purpose of the present invention were: an outside air temperature of -20° C, an inside air temperature of 20° C, giving a Maximum temperature difference between outside and inside of 40° C.

The inventors found that as thermal induced stress and atmospheric pressure stress occur simultaneously in a glass pane, it is the combined stress ($\sigma_c$), which is the combination of thermal induced stress and atmospheric pressure induced stress, that needs to be considered when dimensioning a VIG. The term "combined induced stress" or "the combination of induced stresses" is understood to mean the sum of the thermal induced stress and the atmospheric pressure induced stress ($\sigma_c = \sigma_p + \sigma_T$). The combined stress can be calculated for the chosen winter conditions $\sigma_{cw}$ and for the chosen summer conditions $\sigma_{cs}$.

It was found that in winter conditions, when the VIG is asymmetric with a thicker first glass pane and a thinner second glass pane, the highest combined winter stress $\sigma_{cwmax}$, which is the highest value between the combined winter stress of the first glass pane ($\sigma_{cw1} = \sigma_{p1} + \sigma_{Tw1}$) and the combined winter stress of the second glass pane ($\sigma_{cw2} = \sigma_{p2} + \sigma_{Tw2}$) $\sigma_{cwmax} = \max(\sigma_{cw1}, \sigma_{cw2})$ is reduced. In particular for an asymmetric VIG respecting the following dimensional criteria :

300 mm $\leq L \leq$ 4000 mm,
300 mm $\leq W \leq$ 1500 mm,
$Z_1 \geq$ 5 mm, $Z_2 \geq$ 3 mm,
$\Delta Z = Z_1 - Z_2 \geq$ 1 mm, and
10 mm $\leq \lambda \leq$ 35 mm,
the highest combined winter stress is lower than the highest combined winter stress of an equivalent symmetric VIG having the same overall thickness.

The mild summer temperature conditions used for the purpose of the present invention were: an outside air temperature of 32° C, an inside air temperature of 24° C, and a solar flux of 783 W/m². 

In summer conditions, the highest combined summer stress $\sigma_{csmax}$, is the highest value between the combined summer stress of the first glass pane ($\sigma_{cs1} = \sigma_{p1} + \sigma_{Ts1}$) and the combined summer stress of the second glass pane ($\sigma_{cs2} = \sigma_{p2} + \sigma_{Ts2}$) ($\sigma_{csmax} = \max(\sigma_{cs1}, \sigma_{cs2})$. It was found in summer condition that in order to be acceptable, the highest combined summer stress $\sigma_{csmax}$ in an asymmetric VIG should be less than or equal to the maximum combined induced strass, which is either $\sigma_{cwmax}$ or $\sigma_{csmax}$, of its equivalent symmetric VIG. When this relationship is respected, then the breakage risk due to combined atmospheric and thermal induced stresses, in both hard winter and mild summer conditions, is never higher for the asymmetric VIG than for its equivalent symmetric VIG.

It was found that an asymmetric VIG respecting this combined induced stress limitation could be made by balancing the energetic absorptance of the first and the second glass panes as well as their thicknesses for different sets of L,W and $\lambda$ parameter ranges.

In the following particular embodiments A to E of the present invention the asymmetric VIG respects the following relationships:

$\sigma_{cw2}$ (asymmetric VIG) < $\sigma_{cw2}$ (equivalent symmetric VIG) and
$\sigma_{cs1}$(asymmetric VIG) $\leq \sigma_{cw2}$ (equivalent symmetric VIG)

Embodiment A: Asymmetric VIG wherein $Z_2$ = 3mm and 10 mm $\leq \lambda \leq$ 25 mm when the following condition on the weighted difference of energetic absorption of the first and the second glass pane is met: $\Delta EA \leq 0.0084 \, \Delta Z_2 /\text{mm}^2 - 0.1545$ $\Delta Z/\text{mm} + 0.6966$; wherein $\Delta EA = EA_1 - 2*EA_2$, wherein 300 mm $\leq L \leq$ 3000 mm, 300 mm $\leq W \leq$ 1500 mm, $Z_1 \geq$ 5 mm, $\Delta Z = Z_1 - Z_2 \geq$ 1 mm.

Embodiment B: Asymmetric VIG wherein $Z_2$ = 4mm and 10 mm $\leq \lambda \leq$ 25 mm when the following condition on the weighted difference of energetic absorption of the first and the second glass pane is met: $\Delta EA \leq - 0.0214 \, \Delta Z/\text{mm} + 0.5696$; wherein $\Delta EA = EA_1 - 2*EA_2$, wherein 300 mm $\leq L \leq$ 3000 mm, 300 mm $\leq W \leq$ 1500 mm, $Z_1 \geq$ 5 mm, $\Delta Z = Z_1 - Z_2 \geq$ 1 mm.

Embodiment C: Asymmetric VIG wherein Z2 = 5mm and 10 mm $\leq \lambda \leq$ 35 mm when the following condition on the weighted difference of energetic absorption of the first and the second glass pane is met: wherein $\Delta EA \leq 0.0033 \, \Delta Z_2 /\text{mm}^2 - 0.0468 \, \Delta Z/\text{mm} + 0.7434$; $\Delta EA = EA_1 - 2*EA_2$, wherein 300 mm $\leq L \leq$ 3000 mm, 300 mm $\leq W \leq$ 1500 mm, $Z_1 \geq$ 5 mm, $\Delta Z = Z_1 - Z_2 \geq$ 1 mm.

Embodiment D: Asymmetric VIG wherein Z2 = 6mm and 10 mm $\leq \lambda \leq$ 35 mm when the following condition on the weighted difference of energetic absorption of the first and the second glass pane is met: wherein $\Delta EA \leq 0.0033 \, \Delta Z^2 /\text{mm}^2 - 0.0468 \, \Delta Z/\text{mm} + 0.7702$; $\Delta EA = EA_1 - 2*EA_2$, wherein 300 mm $\leq L \leq$ 3000 mm, 300 mm $\leq W \leq$ 1500 mm, $Z_1 \geq$ 5 mm, $\Delta Z = Z_1 - Z_2 \geq$ 1 mm.

Embodiment E: Asymmetric VIG wherein $Z_2$ = 4mm and 25 mm < $\lambda \leq$ 30 mm when the following condition on the weighted difference of energetic absorption of the first and the second glass pane is met: wherein $\Delta EA \leq - 0.0308 \, \Delta Z/\text{mm} + 0.5294$; $\Delta EA = EA_1 - 2*EA_2$, wherein 300 mm $\leq L \leq$ 3000 mm, 300 mm $\leq W \leq$ 1500 mm, $Z_1 \geq$ 5 mm, $\Delta Z = Z_1 - Z_2 \geq$ 1 mm.

Indeed it was found that these limitations of the energetical absorptances of the first and second panes of an asymmetric VIG led to temperature differences in the first and second glass panes that kept the combined stress levels below the required limits.

For summer conditions inventors found that there was a correlation between the energetic absorptances of the glass panes and the temperature differences obtained. The follow relation was established based on the example coatings mentioned above positioned on the inner face of the first glass pane of the VIG:
$\Delta T /° C = 37.386 \times \Delta EA +6.2068$ ; $\Delta EA = EA_1 - 2*EA_2$ and $\Delta T = T_1-T_2$. Energetic absorptances EA of the glass panes are determined according to standard ISO15099 referring to EN410:2011, for the glass panes when they are in the VIG. The pillars are not taken into account for the calculation of EA.

These stress calculations were performed for a large number of glass dimensions, thicknesses and infrared reflective coatings. In particular the following infrared reflective coatings commercialized by the Asahi Glass Company (AGC) were used: Stopray Ultra 50 (U50), I-plus Top 1.1(I+). All of these coatings provide an emissivity <0.4. For the calculations the glazing are considered free and unconstrained at all edges.

Soda lime clear glass Planibel Clearlite (CL) was used for most examples. Dark Grey Glass (DG) has been used for some examples.

Comparative examples are labelled 'C.Ex.', examples according to the present invention are labelled 'Ex.'.

In the examples and comparative examples, the space between the glass sheets is 100 $\mu$m and the array of pillars is a regular square array, and the size W $\times$ L is 1.5 m $\times$ 3 m.

Table 4

| | VIG composition | | | | | |
| --- | --- | --- | --- | --- | --- | --- |
| | Outer glass pane | | Inner glass pane | | | Pitch |
| | Type | thickn. (mm) | Coating in P3 | Type | thickn. (mm) | (mm) |
| Ex.1 | CL | 8 | I+ | CL | 4 | 25 |
| C.Ex.1 | DG | 8 | I+ | CL | 4 | 25 |
| | | | | | | |
| Ex.2 | CL | 7 | I+ | CL | 3 | 25 |
| C.Ex.2 | CL | 5 | I+ | CL | 5 | 25 |
| | | | | | | |
| Ex.3 | CL | 12 | I+ | CL | 4 | 25 |

(continued)

| | VIG composition | | | | | Pitch |
|---|---|---|---|---|---|---|
| | Outer glass pane | | Inner glass pane | | | |
| | Type | thickn. (mm) | Coating in P3 | Type | thickn. (mm) | (mm) |
| C.Ex.3 | CL | 8 | I+ | CL | 8 | 25 |
| C.Ex.4 | DG | 11 | I+ | CL | 5 | 25 |
| C.Ex.5 | DG | 8 | I+ | CL | 8 | 25 |
| | | | | | | |
| Ex.4 | CL | 11 | I+ | CL | 5 | 25 |
| C.Ex.6 | CL | 8 | I+ | CL | 8 | 25 |
| C.Ex.7 | DG | 8 | I+ | CL | 8 | 25 |
| | | | | | | |
| Ex.5 | CL | 12 | I+ | CL | 6 | 25 |
| C.Ex.8 | DG | 12 | I+ | CL | 6 | 25 |
| C.Ex.9 | DG | 9 | I+ | CL | 9 | 25 |
| | | | | | | |
| Ex.6 | CL | 10 | I+ | CL | 4 | 30 |
| C.Ex.10 | CL | 7 | I+ | CL | 7 | 30 |
| | | | | | | |
| Ex.7 | CL | 11 | I+ | CL | 5 | 30 |
| C.Ex.11 | CL | 8 | I+ | CL | 8 | 30 |
| C.Ex.12 | DG | 11 | I+ | CL | 5 | 30 |
| C.Ex.13 | DG | 8 | I+ | CL | 8 | 30 |
| | | | | | | |
| Ex.8 | CL | 12 | I+ | CL | 6 | 30 |
| C.Ex.14 | DG | 12 | I+ | CL | 6 | 30 |
| C.Ex.15 | DG | 9 | I+ | CL | 9 | 30 |
| | | | | | | |
| Ex.9 | CL | 11 | I+ | CL | 5 | 35 |
| C.Ex.16 | CL | 8 | I+ | CL | 8 | 35 |
| C.Ex.17 | DG | 11 | I+ | CL | 5 | 35 |
| C.Ex.18 | DG | 8 | I+ | CL | 8 | 35 |
| | | | | | | |
| Ex.10 | CL | 12 | I+ | CL | 6 | 35 |
| C.Ex.19 | DG | 12 | I+ | CL | 6 | 35 |
| C.Ex.20 | DG | 9 | I+ | CL | 9 | 35 |

The maximum allowable $\Delta$ EA according to the present invention and the $\Delta$ EA of the respective examples or comparative examples have been calculated. Comparative examples present too high $\Delta$ EA values and therefore present a higher breakage risk, their $\Delta$ EA value is higher than the $\Delta$ EA value permitted as per the present invention.

The table 6 below shows the induced stresses obtained in the examples and comparative examples in summer and winter conditions. The pressure induced stresses in a glass pane above the pillars is noted $\sigma_{p1}$ and $\sigma_{p2}$ respectively The winter temperature stress is denoted $\sigma_{Tw1}$ and $\sigma_{Tw2}$ respectively, the summer temperature stress is denoted $\sigma_{Ts1}$ and

$\sigma_{Ts2}$ respectively. The combined summer stress is denoted $\sigma_{cs1}$ ($\sigma_{cs1 = \sigma_{p1} + \sigma_{Ts1}}$) and $\sigma_{cs2}$($\sigma_{cs2= \sigma_{p2}+ \sigma_{Ts2}}$)respectively, the combined winter stress is denoted $\sigma_{cw1}$($\sigma_{cw1 = \sigma_{p1} + \sigma_{Tw1}}$) and $\sigma_{cw2}$ ($\sigma_{cw2 = \sigma_{p2} + \sigma_{Tw2}}$) respectively. The highest of combined winter stress and the highest combined summer are denoted $\sigma_{cwmax}$($\sigma_{cwmax} = \max(\sigma_{cw1} + \sigma_{cw2)}$) and $\sigma_{csmax}$ $_{(\sigma_{cwmax}} = \max(\sigma_{cs1} + \sigma_{cs2})$) respectively. The highest combined induced stress, which occurs in either summer or winter conditions is denoted, $\sigma_{cmax}$. The measurement unit for all stresses is MPa. The maximum combined stress value for each example is underlined and corresponds thus to $\sigma_{cmax}$.

As can be seen in table 6 below, in symmetric VIG's the highest combined stress values are, with few exceptions, reached in winter conditions on the second glass pane. The maximum stress value reached in any condition, serves as a reference point to compare an asymmetric VIG with its equivalent symmetric VIG. Furthermore it was found that when the VIG is asymmetric with a thicker first glass pane and a thinner second glass pane the highest combined winter stress $\sigma_{cwmax}$ is reduced and in particular for an asymmetric VIG respecting the following dimensional criteria : 300 mm $\leq$ L $\leq$ 4000 mm, 300 mm $\leq$ W $\leq$ 1500 mm, $Z_1 \geq 5$ mm, $Z_2 \geq 3$ mm, $\Delta Z = Z_1 - Z_2 \geq 1$ mm, and 10 mm $\leq \lambda \leq$ 35 mm, the highest combined winter stress is lower than for the equivalent symmetric VIG having the same overall thickness.

It can also be seen in the table 6 below that in summer conditions the highest combined summer stress $\sigma_{csmax}$ is higher in an asymmetric VIG than in its equivalent symmetric VIG. In particular embodiments of the present invention, that is in the examples marked with an asterisk, the highest combined summer stress, $\sigma_{csmax}$ in the examples of the present invention was found to be acceptable, the highest combined summer stress $\sigma_{csmax}$ being less than or equal to highest combined stress (winter or summer) of its equivalent symmetric VIG, that is the combined winter stress $\sigma_{cw2}$ of the second glass pane in its equivalent symmetric VIG.

Table 6

| | Outer pane stresses (MPa) | | | | | Inner pane stresses (MPa) | | | | |
|---|---|---|---|---|---|---|---|---|---|---|
| | $\sigma_{Ts1}$ | $\sigma_{Tw1}$ | $\sigma_{p1}$ | $\sigma_{cs1}$ | $\sigma_{cw1}$ | $\sigma_{Ts2}$ | $\sigma_{Tw2}$ | $\sigma_{p2}$ | $\sigma_{cs2}$ | $\sigma_{cw2}$ |
| Ex.1 | 1.84 | 0.04 | 1.07 | 2.92 | 1.11 | 1.63 | 4.09 | 4.30 | 5.93 | 8.38 |
| C.Ex.1 | 11.27 | 0.04 | 1.07 | 12.34 | 1.11 | 9.98 | 4.09 | 4.30 | 14.28 | 8.38 |
| | | | | | | | | | | |
| Ex.2 | 1.79 | 1.66 | 1.40 | 3.20 | 3.07 | 2.18 | 2.08 | 7.64 | 9.82 | 9.72 |
| C.Ex.2 | 0.84 | 9.14 | 2.75 | 3.59 | 11.89 | 0.82 | 9.36 | 2.75 | 3.57 | 12.11 |
| | | | | | | | | | | |
| Ex.3 | 2.36 | 0.00 | 0.48 | 2.84 | 0.48 | 2.41 | 1.71 | 4.30 | 6.71 | 6.01 |
| C.Ex.3 | 1.03 | 0.89 | 1.07 | 2.10 | 1.97 | 0.10 | 9.15 | 1.07 | 1.17 | 10.22 |
| C.Ex.4 | 11.43 | 0.00 | 0.57 | 11.99 | 0.57 | 7.87 | 4.41 | 2.75 | 10.62 | 7.16 |
| C.Ex.5 | 8.80 | 0.89 | 1.07 | 9.88 | 1.97 | 0.86 | 9.15 | 1.07 | 1.93 | 10.22 |
| | | | | | | | | | | |
| Ex.4 | 2.23 | 0.00 | 0.57 | 2.80 | 0.57 | 1.53 | 4.41 | 2.75 | 4.28 | 7.16 |
| C.Ex.6 | 1.03 | 0.89 | 1.07 | 2.10 | 1.97 | 0.10 | 9.15 | 1.07 | 1.17 | 10.22 |
| C.Ex.7 | 8.80 | 0.89 | 1.07 | 9.88 | 1.97 | 0.86 | 9.15 | 1.07 | 1.93 | 10.22 |
| | | | | | | | | | | |
| Ex.5 | 2.25 | 0.00 | 0.48 | 2.73 | 0.48 | 1.11 | 5.51 | 1.91 | 3.02 | 7.42 |
| C.Ex.8 | 11.53 | 0.00 | 0.48 | 12.00 | 0.48 | 5.66 | 5.51 | 1.91 | 7.57 | 7.42 |
| C.Ex.9 | 8.83 | 0.00 | 0.85 | 9.68 | 0.85 | 0.00 | 9.03 | 0.85 | 0.85 | 9.88 |
| | | | | | | | | | | |
| Ex.6 | 2.15 | 0.00 | 0.99 | 3.14 | 0.99 | 2.01 | 2.78 | 6.19 | 8.20 | 8.97 |
| C.Ex.10 | 0.86 | 2.73 | 2.02 | 2.88 | 4.75 | 0.25 | 9.25 | 2.02 | 2.27 | 11.27 |
| | | | | | | | | | | |
| Ex.7 | 2.23 | 0.00 | 0.82 | 3.05 | 0.82 | 1.53 | 4.41 | 3.96 | 5.49 | 8.37 |
| C.Ex.11 | 1.03 | 0.89 | 1.55 | 2.58 | 2.44 | 0.10 | 9.15 | 1.55 | 1.65 | 10.69 |

(continued)

| | Outer pane stresses (MPa) | | | | | Inner pane stresses (MPa) | | | | |
|---|---|---|---|---|---|---|---|---|---|---|
| | $\sigma_{Ts1}$ | $\sigma_{Tw1}$ | $\sigma_{p1}$ | $\sigma_{cs1}$ | $\sigma_{cw1}$ | $\sigma_{Ts2}$ | $\sigma_{Tw2}$ | $\sigma_{p2}$ | $\sigma_{cs2}$ | $\sigma_{cw2}$ |
| C.Ex.12 | 11.43 | 0.00 | 0.82 | 12.24 | 0.82 | 7.87 | 4.41 | 3.96 | 11.83 | 8.37 |
| C.Ex.13 | 8.80 | 0.89 | 1.55 | 10.35 | 2.44 | 0.86 | 9.15 | 1.55 | 2.41 | 10.69 |
| | | | | | | | | | | |
| Ex.8 | 2.25 | 0.00 | 0.69 | 2.94 | 0.69 | 1.11 | 5.51 | 2.75 | 3.86 | 8.26 |
| C.Ex.14 | 11.53 | 0.00 | 0.69 | 12.21 | 0.69 | 5.66 | 5.51 | 2.75 | 8.41 | 8.26 |
| C.Ex.15 | 8.83 | 0.00 | 1.22 | 10.05 | 1.22 | 0.00 | 9.03 | 1.22 | 1.22 | 10.26 |
| | | | | | | | | | | |
| Ex.9 | 2.23 | 0.00 | 1.11 | 3.34 | 1.11 | 1.53 | 4.41 | 5.39 | 6.92 | 9.80 |
| C.Ex.16 | 1.03 | 0.89 | 2.11 | 3.13 | 3.00 | 0.10 | 9.15 | 2.11 | 2.21 | 11.25 |
| C.Ex.17 | 11.43 | 0.00 | 1.11 | 12.54 | 1.11 | 7.87 | 4.41 | 5.39 | 13.26 | 9.80 |
| C.Ex.18 | 8.80 | 0.89 | 2.11 | 10.91 | 3.00 | 0.86 | 9.15 | 2.11 | 2.97 | 11.25 |
| | | | | | | | | | | |
| Ex.10 | 2.25 | 0.00 | 0.94 | 3.19 | 0.94 | 1.11 | 5.51 | 3.74 | 4.85 | 9.25 |
| C.Ex.19 | 11.53 | 0.00 | 0.94 | 12.46 | 0.94 | 5.66 | 5.51 | 3.74 | 9.40 | 9.25 |
| C.Ex.20 | 8.83 | 0.00 | 1.66 | 10.49 | 1.66 | 0.00 | 9.03 | 1.66 | 1.66 | 10.70 |

**Claims**

1. A vacuum insulating glazing unit (10) provided with one infrared reflecting coating, having a length L with 300 mm $\leq$ L $\leq$ 4000 mm, and a width W, with 300 mm $\leq$ W $\leq$ 1500 mm, and comprising:

   a. a first glass pane (1) having an inner pane face (12) and an outer pane face (13), having a thickness $Z_1$, the first glass pane having an energetical absorptance $EA_1$ and
   b. a second glass pane (2) having an inner pane face (22) and an outer pane face (23) and having a thickness, $Z_2$, and bearing the infrared reflective coating on its inner pane face, the coated second glass pane having an energetical absorptance $EA_2$ ;
   c. a set of discrete spacers (3) positioned between the first and second glass panes, maintaining a distance between the first and the second glass panes and forming an array having a pitch $\lambda$, the pitch, $\lambda$ being comprised between 10 mm and 35 mm ;
   d. a hermetically bonding seal (4) sealing the distance between the first and second glass panes over a perimeter thereof;
   e. an internal volume, V, defined by the first and second glass panes and the set of discrete spacers and closed by the hermetically bonding seal and wherein there is a vacuum of absolute pressure of less than 0.1 mbar, and
   f. wherein the inner pane faces of the first and second glass panes face the internal volume, V;
   g. wherein the first glass pane is thicker than the second glass pane ($Z_1 > Z_2$), and in that $\Delta EA \leq 0.0033\,\Delta Z^2\,/mm^2 - 0.0468\,\Delta Z/mm + 0.7702$; wherein $\Delta EA = EA_1 - 2{*}EA_2$, and in that $Z_1 \geq 5$ mm, $Z_2 \geq 3$ mm, and $\Delta Z = (Z_1 - Z_2) \geq 1$ mm, and in that 10 mm $\leq \lambda \leq$ 35 mm.

2. A vacuum insulating glazing unit according to claim 1, wherein $Z_2$ = 3mm and 10 mm $\leq \lambda \leq$ 25 mm when the following condition on the weighted difference of energetic absorption of the first and the second glass pane is met: $\Delta EA \leq 0.0084\,\Delta Z^2\,/mm^2 - 0.1545\,\Delta Z/mm + 0.6966$; wherein $\Delta EA = EA_1 - 2{*}EA_2$, and 300 mm $\leq$ L $\leq$ 3000 mm, 300 mm $\leq$ W $\leq$ 1500 mm.

3. A vacuum insulating glazing unit according to claim 1 wherein $Z_2$ = 4mm and 10 mm $\leq \lambda \leq$ 25 mm and $\Delta EA \leq$ - 0.0214 $\Delta Z/mm$ + 0.5696 and 300 mm $\leq$ L $\leq$ 3000 mm, 300 mm $\leq$ W $\leq$ 1500 mm.

4. A vacuum insulating glazing unit according to claim 1, wherein $Z_2$ = 5mm and 10 mm $\leq \lambda \leq$ 35 mm and $\Delta EA \leq$ 0.0033 $\Delta Z^2$ /mm$^2$ - 0.0468 $\Delta Z$/mm + 0.7434 and 300 mm $\leq$ L $\leq$ 3000 mm, 300 mm $\leq$ W $\leq$ 1500 mm.

5. A vacuum insulating glazing unit according to claim 1, wherein $Z_2$ = 6mm and 10 mm $\leq \lambda \leq$ 35 mm and $\Delta EA \leq$ 0.0033 $\Delta Z^2$ /mm$^2$ - 0.0468 $\Delta Z$/mm + 0.7702 and 300 mm $\leq$ L $\leq$ 3000 mm, 300 mm $\leq$ W $\leq$ 1500 mm.

6. A vacuum insulating glazing unit according to claim 1, wherein $Z_2$ = 4mm and 25 mm < $\lambda \leq$ 30 mm and $\Delta EA \leq$ -0.0308 $\Delta Z$/mm + 0.5294 and 300 mm $\leq$ L $\leq$ 3000 mm, 300 mm $\leq$ W $\leq$ 1500 mm.

7. A vacuum insulating glazing according to any one preceding claim, wherein the infrared reflecting coating comprises a metal-based functional low emissive layer providing an emissivity of at most 0.04, preferably at most 0.02.

8. A vacuum insulating glazing unit according to any one of the preceding claims, wherein at least one of the outer pane faces (13; 23) of the first and second glass panes is laminated to at least one glass sheet by at least one polymer interlayer forming a laminated assembly.

9. A vacuum insulating glazing unit according to any one of the preceding claims, wherein at least one of the outer pane faces (13; 23) of the first and second glass is coupled to a third glass pane along the periphery of the vacuum insulating glazing unit via a peripheral spacer bar creating in insulating cavity sealed by a peripheral edge seal.

10. A partition defining an exterior space and an interior space, said partition comprising an opening being closed by a vacuum insulating glazing unit according to any of the preceding claims, wherein the first glass pane is facing the exterior space.

11. Use of a vacuum insulated glazing unit according to any one of claims 1 to 9, to close the opening of a partition defining an exterior space and an interior space, wherein the first glass pane is facing the exterior space.


**Patentansprüche**

1. Vakuumisolierende Verglasungseinheit (10), die mit einer infrarotreflektierenden Beschichtung versehen ist, eine Länge L, mit 300 mm $\leq$ L $\leq$ 4000 mm, und eine Breite W, mit 300 mm $\leq$ W $\leq$ 1500 mm, aufweist und Folgendes umfasst:

   a. eine erste Glasscheibe (1), die eine innere Scheibenfläche (12) und eine äußere Scheibenfläche (13) aufweist und eine Dicke $Z_1$ aufweist, wobei die erste Glasscheibe einen Energieabsorptionsgrad $EA_1$ aufweist, und
   b. eine zweite Glasscheibe (2), die eine innere Scheibenfläche (22) und eine äußere Scheibenfläche (23) aufweist und eine Dicke $Z_2$ aufweist und auf ihrer inneren Scheibenfläche die infrarotreflektierende Beschichtung trägt, wobei die beschichtete zweite Glasscheibe einen Energieabsorptionsgrad $EA_2$ aufweist;
   c. einen Satz einzelner Abstandhalter (3), die zwischen der ersten und zweiten Glasscheibe angeordnet sind, einen Abstand zwischen der ersten und der zweiten Glasscheibe aufrechterhalten und eine Anordnung mit einem Abstandsmaß $\lambda$ ausbilden, wobei das Abstandsmaß $\lambda$ zwischen 10 mm und 35 mm beträgt;
   d. eine hermetisch verbindende Dichtung (4), die den Abstand zwischen der ersten und zweiten Glasscheibe über einen Umfang derselben hinweg abdichtet;
   e. ein Innenvolumen V, das durch die erste und zweite Glasscheibe und den Satz einzelner Abstandhalter definiert und durch die hermetisch verbindende Dichtung verschlossen wird und in dem ein Vakuum mit einem Absolutdruck von weniger als 0,1 mbar vorliegt, und
   f. wobei die inneren Scheibenflächen der ersten und zweiten Glasscheibe dem Innenvolumen V zugewandt sind;
   g. wobei die erste Glasscheibe dicker als die zweite Glasscheibe ist ($Z_1$ > $Z_2$) und dadurch, dass $\Delta EA \leq$ 0,0033 $\Delta Z^2$ /mm$^2$ - 0,0468 $\Delta Z$/mm + 0,7702; wobei $\Delta EA = EA_1$ - 2*$EA_2$, und dadurch, dass $Z_1 \geq$ 5 mm, $Z_2 \geq$ 3 mm und $\Delta Z = (Z_1 - Z_2) \geq$ 1 mm, und dadurch, dass 10 mm $\leq \lambda \leq$ 35 mm.

2. Vakuumisolierende Verglasungseinheit nach Anspruch 1, wobei $Z_2$ = 3 mm und 10 mm $\leq \lambda \leq$ 25 mm, wenn die folgende Bedingung bezüglich der gewichteten Differenz der Energieabsorption der ersten und der zweiten Glasscheibe erfüllt ist: $\Delta EA \leq$ 0,0084 $\Delta Z^2$ /mm$^2$ - 0,1545 $\Delta Z$/mm + 0,6966; wobei $\Delta EA = EA_1$ - 2*$EA_2$ und 300 mm $\leq$ L $\leq$ 3000 mm, 300 mm $\leq$ W $\leq$ 1500 mm.

3. Vakuumisolierende Verglasungseinheit nach Anspruch 1, wobei $Z_2$ = 4 mm und 10 mm $\leq \lambda \leq$ 25 mm und $\Delta EA \leq$ -0,0214 $\Delta Z$/mm + 0,5696 und 300 mm $\leq$ L $\leq$ 3000 mm, 300 mm $\leq$ W $\leq$ 1500 mm.

4. Vakuumisolierende Verglasungseinheit nach Anspruch 1, wobei $Z_2 = 5$ mm und 10 mm $\leq \lambda \leq 35$ mm und $\Delta EA \leq 0,0033$ $\Delta Z^2$ /mm$^2$ - 0,0468 $\Delta Z$/mm + 0,7434 und 300 mm $\leq$ L $\leq$ 3000 mm, 300 mm $\leq$ W $\leq$ 1500 mm.

5. Vakuumisolierende Verglasungseinheit nach Anspruch 1, wobei $Z_2 = 6$ mm und 10 mm $\leq \lambda \leq 35$ mm und $\Delta EA \leq 0,0033$ $\Delta Z^2$ /mm$^2$ - 0,0468 $\Delta Z$/mm + 0,7702 und 300 mm $\leq$ L $\leq$ 3000 mm, 300 mm $\leq$ W $\leq$ 1500 mm.

6. Vakuumisolierende Verglasungseinheit nach Anspruch 1, wobei $Z_2 = 4$ mm und 25 mm $\leq \lambda \leq 30$ mm und $\Delta EA \leq$ -0,0308 $\Delta Z$/mm + 0,5294 und 300 mm $\leq$ L $\leq$ 3000 mm, 300 mm $\leq$ W $\leq$ 1500 mm.

7. Vakuumisolierende Verglasung nach einem vorangehenden Anspruch, wobei die infrarotreflektierende Beschichtung eine metallbasierte Funktionsschicht mit niedriger Emission umfasst, die einen Emissionsgrad von höchstens 0,04, bevorzugt höchstens 0,02, bereitstellt.

8. Vakuumisolierende Verglasungseinheit nach einem der vorangehenden Ansprüche, wobei wenigstens eine der äußeren Scheibenflächen (13; 23) der ersten und zweiten Glasscheibe durch wenigstens eine Polymer-Zwischenschicht an wenigstens eine Glasscheibe laminiert ist, wodurch eine laminierte Anordnung ausgebildet wird.

9. Vakuumisolierende Verglasungseinheit nach einem der vorangehenden Ansprüche, wobei wenigstens eine der äußeren Scheibenflächen (13; 23) des ersten und zweiten Glases entlang der Peripherie der vakuumisolierenden Verglasungseinheit über einen peripheren Abstandsstab mit einer dritten Glasscheibe gekoppelt ist, wodurch ein isolierender Hohlraum geschaffen wird, der durch eine periphere Randdichtung abgedichtet ist.

10. Trennwand, die einen äußeren Raum und einen inneren Raum definiert, wobei die Trennwand eine Öffnung umfasst, die durch eine vakuumisolierende Verglasungseinheit nach einem der vorangehenden Ansprüche verschlossen wird, wobei die erste Glasscheibe dem äußeren Raum zugewandt ist.

11. Verwendung einer vakuumisolierenden Verglasungseinheit nach einem der Ansprüche 1 bis 9 zum Verschließen der Öffnung einer Trennwand, die einen äußeren Raum und einen inneren Raum definiert, wobei die erste Glasscheibe dem äußeren Raum zugewandt ist.

**Revendications**

1. Unité de vitrage isolant sous vide (10) pourvue d'un revêtement réfléchissant les infrarouges, ayant une longueur L avec 300 mm $\leq$ L $\leq$ 4000 mm, et une largeur W avec 300 mm $\leq$ W $\leq$ 1500 mm, et comprenant :

   a. un premier carreau de verre (1) ayant une face interne de carreau (12) et une face externe de carreau (13), ayant une épaisseur $Z_1$, le premier carreau de verre revêtu ayant un facteur d'absorption énergétique $EA_1$ et
   b. un deuxième carreau de verre (2) ayant une face interne de carreau (22) et une face externe de carreau (23) et ayant une épaisseur $Z_2$, et portant le revêtement réfléchissant les infrarouges sur sa face interne de carreau, le deuxième carreau de verre revêtu ayant un facteur d'absorption énergétique $EA_2$ ;
   c. un ensemble d'espaceurs discrets (3) positionnés entre le premier et le deuxième carreau de verre, maintenant une distance entre le premier et le deuxième carreau de verre et formant un réseau ayant un pas $\lambda$, le pas $\lambda$ étant compris entre 10 mm et 35 mm ;
   d. un joint d'assemblage hermétique (4) scellant la distance entre le premier et le deuxième carreau de verre sur un périmètre de ceux-ci ;
   e. un volume interne, V, défini par les premier et deuxième carreaux de verre et l'ensemble d'espaceurs discrets et fermé par le joint d'assemblage hermétique et dans lequel il y a un vide de pression absolue inférieure à 0,1 mbar, et
   f. dans laquelle les faces internes de carreau des premier et deuxième carreaux de verre font face au volume interne, V ;
   g. dans laquelle le premier carreau de verre est plus épais que le deuxième carreau de verre ($Z_1 > Z_2$), et en ce que $\Delta EA \leq 0,0033 \Delta Z^2$/mm$^2$ - 0,0468 $\Delta Z$/mm + 0,7702 ; dans laquelle $\Delta EA = EA_1 - 2*EA_2$, et en ce que $Z_1 \geq 5$ mm, $Z_2 \geq 3$ mm, et $\Delta Z = (Z_1 - Z_2) \geq 1$ mm, et en ce que 10 mm $\leq \lambda \leq 35$ mm.

2. Unité de vitrage isolant sous vide selon la revendication 1, dans laquelle $Z_2 = 3$ mm et 10 mm $\leq \lambda \leq 25$ mm quand la condition suivante sur la différence pondérée d'absorption énergétique du premier et du deuxième carreau de verre est respectée : $\Delta EA \leq 0,0084 \Delta Z^2$/mm$^2$ - 0,1545 $\Delta Z$/mm + 0,6966 ; dans laquelle $\Delta EA = EA_1 - 2*EA_2$, et 300 mm $\leq$ L $\leq$

3000 mm, 300 mm $\leq$ W $\leq$ 1500 mm.

3. Unité de vitrage isolant sous vide selon la revendication 1 dans laquelle $Z_2$ = 4 mm et 10 mm $\leq \lambda \leq$ 25 mm et $\Delta EA \leq$ -0,0214 $\Delta Z$/mm + 0,5696 et 300 mm $\leq$ L $\leq$ 3000 mm, 300 mm $\leq$ W $\leq$ 1500 mm.

4. Unité de vitrage isolant sous vide selon la revendication 1, dans laquelle $Z_2$ = 5 mm et 10 mm $\leq \lambda \leq$ 35 mm et $\Delta EA \leq$ 0,0033 $\Delta Z^2$/mm$^2$ - 0,0468 $\Delta Z$/mm + 0,7434 et 300 mm $\leq$ L $\leq$ 3000 mm, 300 mm $\leq$ W $\leq$ 1500 mm.

5. Unité de vitrage isolant sous vide selon la revendication 1, dans laquelle $Z_2$ = 6 mm et 10 mm $\leq \lambda \leq$ 35 mm et $\Delta EA \leq$ 0,0033 $\Delta Z^2$/mm$^2$ - 0,0468 $\Delta Z$/mm + 0,7702 et 300 mm $\leq$ L $\leq$ 3000 mm, 300 mm $\leq$ W $\leq$ 1500 mm.

6. Unité de vitrage isolant sous vide selon la revendication 1, dans laquelle $Z_2$ = 4 mm et 25 mm $\leq \lambda \leq$ 30 mm et $\Delta EA \leq$ -0,0308 $\Delta Z$/mm + 0,5294 et 300 mm $\leq$ L $\leq$ 3000 mm, 300 mm $\leq$ W $\leq$ 1500 mm.

7. Vitrage isolant sous vide selon une quelconque revendication précédente, dans lequel le revêtement réfléchissant les infrarouges comprend une couche fonctionnelle de faible émissivité à base de métal fournissant une émissivité de 0,04 maximum, de préférence 0,02 maximum.

8. Unité de vitrage isolant sous vide selon l'une quelconque des revendications précédentes, dans laquelle au moins une des faces externes de carreau (13 ; 23) des premier et deuxième carreaux de verre est stratifiée avec au moins une feuille de verre par au moins une couche intercalaire en polymère formant un ensemble stratifié.

9. Unité de vitrage isolant sous vide selon l'une quelconque des revendications précédentes, dans laquelle au moins une des faces externes de carreau (13 ; 23) des premier et deuxième verres est couplée à un troisième carreau de verre le long de la périphérie de l'unité de vitrage isolant sous vide par le biais d'une barre d'espacement périphérique créant une cavité isolante scellée par un joint de bord périphérique.

10. Cloison définissant un espace extérieur et un espace intérieur, ladite cloison comprenant une ouverture fermée par une unité de vitrage isolant sous vide selon l'une quelconque des revendications précédentes, dans laquelle le premier carreau de verre fait face à l'espace extérieur.

11. Utilisation d'une unité de vitrage isolant sous vide selon l'une quelconque des revendications 1 à 9 pour fermer l'ouverture d'une cloison définissant un espace extérieur et un espace intérieur, dans laquelle le premier carreau de verre fait face à l'espace extérieur.

Figure 1

**EP 3 942 142 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001316137 A
- JP 2001316138 A
- US 20150354264 A1
- WO 2016063007 A1
- EP 1630344 A1
- EP 1033352 A1
- WO 2015150207 A1
- WO 2015150403 A1
- WO 2016091672 A1
- WO 2016169823 A1
- WO 2018001965 A1
- WO 2011061208 A1